# EUROPEAN PATENT APPLICATION

(11) **EP 1 653 157 A1**
(43) Date of publication of application: **03.05.2006**
(21) Application number: 05300887.6
(22) Date of filing: 02.11.2005
(51) Int. Cl.: F24C 15/10, A47J 36/24

(54) **Food warmer**

(30) Priority: 02.11.2004 IL 16498904
(71) Applicant: Neger, Moshe, 44814 Elkana (IL)
(72) Inventor: Neger, Moshe, 44814 Elkana (IL)
(74) Representative: Vuillermoz, Bruno

(57) **Abstract**

There is provided a warming tray, especially suitable for installation in a food preparation working surface, including a top layer, having an upper surface and a lower surface, made of a material selected from the group of natural and/or artificial marble, or marble-like stones, synthetic stones, glass, ceramic, stainless steel or other metals or alloys, an intermediate thin layer contacting the lower surface of the top layer, made of thermally sensitive material having electrical terminals extending along edges of the intermediate layer, for applying electrical power thereto, and a thermally insulating layer contacting the lower surface of the intermediate thin layer.

## Description

### FIELD OF THE INVENTION

The present invention relates to food warming or heating and more particularly the invention is concerned with a warming tray especially suitable for installing in food preparation working surfaces.

### BACKGROUND OF THE INVENTION

The problem of warming food in an exact, uniform manner for household and industrial consumers, is shared by many. The household consumers are mainly from the religious sector, who use warming trays on Shabbat and holidays. The industrial consumers include public kitchens, restaurants and catering companies, who wish to keep the food hot until served.

Warming trays over candles to warm trays of food are commonly used by many consumers. The religious sector is accustomed to use electric warming trays or, alternatively, copper-coated trays that rest over the flame of the household's gas burners. There is also the possibility of using baking ovens with special installations for Shabbat. Industrial users use special warming ovens, installations for warming trays over boiling or hot water, or electric warming installations in which food service trays are stored.

The present methods and appliances used have several limitations:
1) The electric warming trays are efficient, but require complicated storage when the tray is not in use. The trays are movable, making their use awkward and dangerously accessible to children, as well as causing damage to the surface on which they are placed;
2) Gas is very efficient for trays over flames, but it is dangerous to use open flames, especially over extended hours and during the night;
3) Warming candles do not allow uniform heating of the warming surface. In addition, the length of time they can be used is limited and requires complicated attention;
4) Baking ovens have a limited volume for storing food containers. Industrial users use large containers, and the use of the ovens is limited.
5) Heating water is efficient from the standpoint of uniform heating, but requires complicated appliances and constant attention, and
6) Warming installations for food service are efficient, but limited in use.

In the religious section, the warming of food on Shabbat and holidays depends upon the requirements of the Halacha. The use of an open flame is forbidden, and therefore, warming candles, fuel containers, ordinary ovens (without a Shabbat installation) and installations based on the heating of water, are not allowed. Therefore, in the religious section, electric warming trays or, alternatively, copper trays covering the open flame (over the existing gas burners in the kitchen) are used. The use of electric warming trays is limited because of the use of incandescent wires, which produce the heat. In using incandescent wires, it must be ascertained that the temperature of the wire does not exceed a predetermined level, because an incandescent wire can reach a state of heating similar to a flame, which is not permitted. Therefore, warming trays have been especially prepared for the religious sector, and these are being use.

### DISCLOSURE OF THE INVENTION

It is therefore a broad object of the present invention to overcome the above-described disadvantages of the prior art appliances and methods of warming food especially on Shabbat and holidays when cooking is forbidden, and to provide a food warming tray suitable for install in food preparation working surfaces.

It is a further object of the present invention to provide a food warming tray which does not cause any damage to the working surface into which it is installed, and does not detract from the available working surface when not in use.

It is still a further object of the present invention to provide a food warming tray in which the heating element does not require a thermostat for controlling its heat.

A further object of the present invention is to provide a food warming tray having an even temperature through its effective warming surface area.

In accordance with the present invention there is therefore provided a warming tray, especially suitable for installation in a food preparation working surface, comprising a top layer, having an upper surface and a lower surface made of a material selected from the group of natural and/or artificial marble, or marble-like stones, synthetic stones, glass, ceramic, stainless steel or other metals or alloys; an intermediate thin layer, contacting the lower surface of said top layer, made of thermally sensitive material having electrical terminals extending along edges of said intermediate layer, for applying electrical power thereto, and a thermally insulating layer contacting the lower surface of said intermediate thin layer.

### BRIEF DESCRIPTION OF THE DRAWINGS

The invention will now be described in connection with certain preferred embodiments with reference to the following illustrative figures, so that it may be more fully understood.

With specific reference now to the figures in detail, it is stressed that the particulars shown are by way of example and for purposes of illustrative discussion of the preferred embodiments of the present invention only, and are presented in the cause of providing what is believed to be the most useful and readily understood description of the principles and conceptual aspects of the invention. In this regard, no attempt is made to show structural details of the invention in more detail than is necessary for a fundamental understanding of the invention, the description taken with the drawings making apparent to those skilled in the art how the several forms of the invention may be embodied in practice.

In the drawings :
Fig. 1 is a cross-sectional view of the warming tray according to the present invention;
Fig. 2 is a perspective view of the thermally sensitive intermediate layer shown in Fig. 1, and
Fig. 3 illustrates a cross-sectional view of a further embodiment of the present invention.

### DETAILED DESCRIPTION OF THE PREFERRED EMBODIMENTS

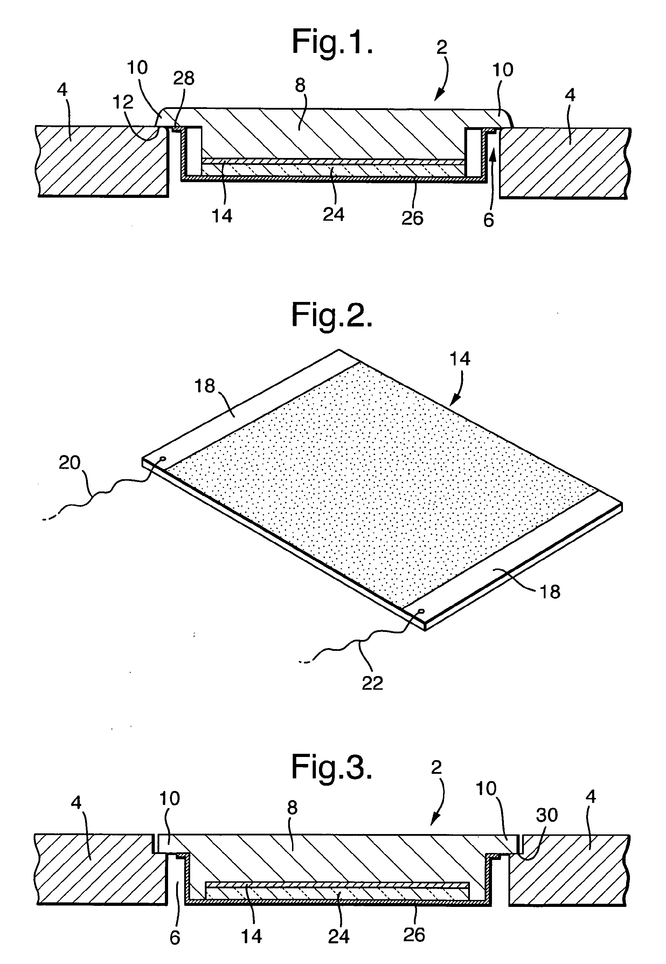

A preferred embodiment of the food warming tray 2 according to the present invention is illustrated in Figs. 1 and 3. There is seen in Fig. 1 a food preparation surface 4, e.g., surfaces alongside or bracketing a sink in a kitchen and extending over, and supported by, cabinets, which surfaces are usually made of granite stones, natural or artificial marbles or marble-like stones, stainless steel or even wood. In the surface 4 there is cut an aperture 6 sized and shaped to accommodate the food warming tray 2 advantageously, with clearance to allow expansion of the tray 2 without touching and affecting the surface 4. In the embodiment shown in Fig. 1, the tray 2 includes a top layer 8 configured to have a flange 10 surrounding its periphery which flange, as seen and understood, rests on top of the rim 12 of the aperture 6 cut in the working surface 4. This top layer 8 can be made of any of the above-described materials of which the working surface is made, in addition to ceramic and glass of which working surfaces are usually not made. The thickness of the top layer 8 will be determined by the material itself, including the heat transfer characteristics thereof and other considerations such as strength and durability. Contacting the lower surface of the top layer 8 is an intermediate layer 14, which layer is a relatively thin layer, which does not possess sufficient mechanical strength to withstand pressure and touch the utensils to be warmed etc., without damage. This intermediate layer 14 is preferably attached to the underside of the effective heating surface area of the top layer 8, by means of an adhesive, so as to make positive contact with the layer 8 for good heat transfer, and to be mechanically protected thereby. The layer 8 is made of thermally sensitive material, advantageously a constant-temperature device, so as to avoid, in some appliances, the use of a thermostat. Thermally sensitive materials can be composed of a mix of materials including nickel, chromium, iron and thermo-sensitive ceramic powder. Bracketing two opposite edges of the intermediate layer 14 there are affixed electrical terminals 18, having electrical wires 20, 22 leading to an electrical power source e.g., common electrical mains. When power is applied to the electrical wires 20, 22, the material of which the intermediate layer 14 is made, will be heated, acting as a thermally resistive resistor keeping the temperature at a predetermined level. Naturally, the terminals 18 may be attached to the other two opposite edges, depending on the installations.

In order to assure that maximum heat is transferred from the intermediate layer 14 to the top layer 8, and in order to protect the thin and fragile intermediate layer 14, there is applied to its lower surface an insulating layer 24 made of any suitable insulating material such as rock or glass fibre. The insulating layer 24 may be affixed to the layer 14 by adhesive or by means of an enclosure 26 protecting the underside of the rigid top layer 8 and the intermediate layer 14. The enclosure 26 may be made of metal, plastic or any other suitable material and is provided with a flange 28 for convenient attachment to the flange 10 of the top layer 8.

While Fig. 1 shows a simple effective manner of installation, it should be realized that other manners of installation could just as well be used, for example, the one shown in Fig. 3. Here, the upper surface of the top layer 8 is flush with the working surface so as to form a single contiguous working surface 4, when the warming tray 2 is not in use. As seen, the aperture 6 of the working surface 4 is formed with a shoulder 30 for supporting the flange 10 of the top layer 8.

It will be evident to those skilled in the art that the invention is not limited to the details of the foregoing illustrated embodiments and that the present invention may be embodied in other specific forms without departing from the spirit or essential attributes thereof. The present embodiments are therefore to be considered in all respects as illustrative and not restrictive, the scope of the invention being indicated by the appended claims rather than by the foregoing description, and all changes which come within the meaning and range of equivalency of the claims are therefore intended to be embraced therein.

## Claims

1. A warming tray, especially suitable for installation in a food preparation working surface, comprising :
a top layer, having an upper surface and a lower surface, made of a material selected from the group of natural and/or artificial marble, or marble-like stones, synthetic stones, glass, ceramic, stainless steel or other metals or alloys;
an intermediate thin layer contacting the lower surface of said top layer, made of thermally sensitive material having electrical terminals extending along edges of said intermediate layer, for applying electrical power thereto, and
a thermally insulating layer contacting the lower surface of said intermediate thin layer.

2. The warming tray as claimed in claim 1, wherein said top layer is configured with an integral flange extending along at least a part of its periphery.

3. The warming tray as claimed in claim 1, wherein said working surface is provided with an aperture and upon installing the tray in the aperture of the working surface, said flange rests on the rim of the working surface.

4. The warming tray as claimed in claim 1, further comprising a closure enclosing said intermediate and thermally insulating layers.

5. The warming tray as claimed in claims 2 and 4, wherein said enclosure is configured with a flange sized to contact the flanges of said top layer.

6. The warming tray as claimed in claim 1, wherein said intermediate layer is attached to the lower surface of said top surface, by means of adhesive.

7. The warming tray as claimed in claim 1, wherein said thermally insulating layer includes rock or glass wool.

8. The warming tray as claimed in claim 1, wherein said thermally insulating layer is attached to the intermediate layer by means of adhesive.

9. The warming tray as claimed in claim 1, wherein said intermediate thin layer of thermally sensitive material is a constant temperature device.

10. The warming tray as claimed in claim 1, wherein said intermediate thin layer is made of a mix of materials including nickel, chromium, iron and thermo-sensitive ceramic powder.
